# EUROPEAN PATENT SPECIFICATION

(11) **EP 1 556 726 B1**
(45) Date of publication and mention of the grant of the patent: **02.08.2006**
(21) Application number: 03759086.6
(22) Date of filing: 28.10.2003
(51) Int. Cl.: G02B 7/182

(54) **CONSTRUCTION ELEMENT, METHOD AND APPARATUS FOR MANUFACTURING A CONSTRUCTION ELEMENT, COMPUTER PROGRAM AND MIRROR**
BAUELEMENT, VERFAHREN UND GERÄT ZUR HERSTELLUNG EINES BAUELEMENTS, COMPUTERPROGRAMM UND SPIEGEL
ELEMENT DE CONSTRUCTION, PROCEDE ET APPAREIL DE PRODUCTION D'UN ELEMENT DE CONSTRUCTION, PROGRAMME INFORMATIQUE ET MIROIR

(30) Priority: 29.10.2002 NL 1021771
(43) Date of publication of application: 27.07.2005
(73) Proprietor: Stichting Astron, 7991 PD Dwingeloo (NL)
(72) Inventor: TROMP, Niels, NL-7908 AM Hoogeveen (NL)
(74) Representative: Winckels, Johannes Hubertus F.
(86) International application number: PCT/NL2003/000731
(87) International publication number: WO 2004/040349

(56) References cited:
- US-A- 4 678 293
- US-A- 5 076 700
- US-A- 5 227 921
- US-A- 5 669 867
- US-B1- 6 176 588

## Description

### BACKGROUND OF THE INVENTION

The invention relates to a construction element. The invention also relates to an apparatus and a method for manufacturing a construction element.

From practice, construction elements are known which are hollowed out from one side. When hollowing out, upstanding walls are left in the element, thereby obtaining a light yet robust construction. After machining, the side from which the element has been hollowed out is virtually entirely open.

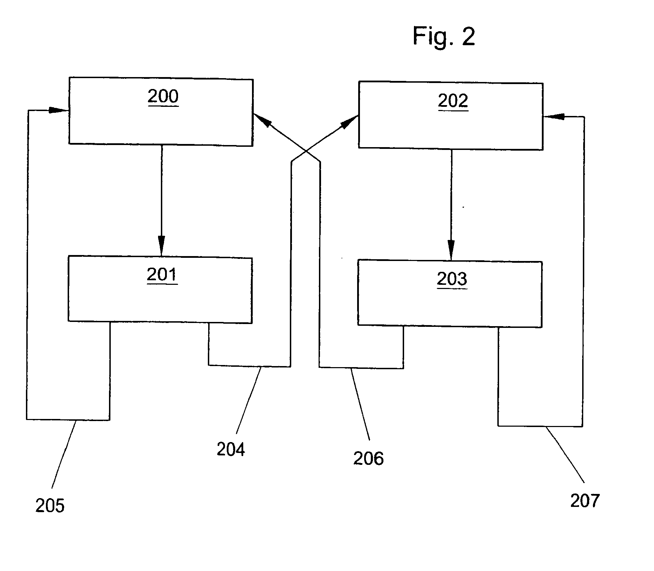

Document US-A-6 176 588 discloses a lightweight mirror blank having a matrix of cell walls defining an array of cells having an opening at both sides of the mirror blank. (see figure 2 and corresponding text).

From EP-A-227 502, a mirror blank is known comprising cavities that are obtained by machining the blank from one side. The openings to this side are narrower than the cavities, so the spaces obtained narrow towards the openings.

US patent 4,678,293, for instance, describes a reduced-weight mirror with a non-plane reflecting face. This mirror comprises a mass of optical material with cells obtained by milling at the rear face.

A drawback of these know construction elements is that they are not rigid. In particular with bending and torsional loads the known construction elements are not rigid due to the virtually entirely open side. To obviate this drawback, it is known to close off the open side after manufacture, for instance by a flat plate. US patent 5,076,700, for instance, describes a lightweight mirror whose core and rear side are obtained from one singe piece of glass. The core has been drilled from the front side, while walls are left for providing rigidity to the core. At the rear side, the drilled parts can be provided with an opening for equalizing pressure differences. Also, at the rear side, mounting holes may be drilled. At the open front side, a front sheet with a reflecting surface has been placed. However, closure of the open side has as a drawback that with the thus obtained closed element, the attachment of the flat sheet to the rest of the element forms a local weakening.

### SUMMARY OF THE INVENTION

It is an object of the invention to provide an improved construction element, in particular it is an object of the invention to provide a construction element that is light as well as rigid, in particular upon bending or torsional loading.

In order to achieve the stated object, the invention provides a construction element comprising: at least one first side with at least one first opening; at least one second side with at least one second opening; at least one first space between the first and second side, connected to the first opening; at least one second space between the first and second side, connected to the second opening and at least one connection between the first side and second side bounding the spaces at least partly, while the first side, the second side and the connection form one integral whole, and at least one of the spaces narrows towards the opening connected to it.

Such an element is light due to the presence of the first space and the second space. Also, due to the connection between the first and second, side, a construction element according to the invention is rigid. Moreover, the first side, the second side and the connection form one integral whole, so that a construction element according to the invention has no local weakening.

The invention also provides in a mirror according to claim 24. In such a mirror, a construction element according to the invention can be advantageously used because in particular with mirrors, both light and rigid constructions are desired, in order to obtain a mirror which is optically as good as possible and which can easily be positioned.

The invention also provides a method according to claim 26. With such a method, a construction element according to the invention can be manufactured.

The invention also provides an apparatus according to claim 27. Such an apparatus is suitable for automatic manufacture of a construction element according to the invention. The invention also provides a data carrier provided with a computer program according to claim 29. With such a program, an apparatus according to the invention can be controlled.

Specific embodiments of the invention are laid down in the dependent claims. Further details, aspects and embodiments of the invention are described hereinafter with reference to the examples in the Figures represented in the drawing.

### BRIEF DESCRIPTION OF THE DRAWINGS

Fig. 1 schematically shows an example of an embodiment of an apparatus for manufacturing a construction element according to the invention.
Fig. 2 schematically shows a flow chart of an example of a method for manufacturing a construction element according to the invention.
Fig. 3 schematically shows a cross-sectional view of a part of an example of a construction element according to the invention in a stage of its manufacture.
Figs. 4a-c schematically show partly cutaway perspective views of examples of embodiments of construction elements according to the invention.
Figs. 5 - 17 schematically show perspective views of examples of embodiments of a construction element according to the invention.

### DETAILED DESCRIPTION

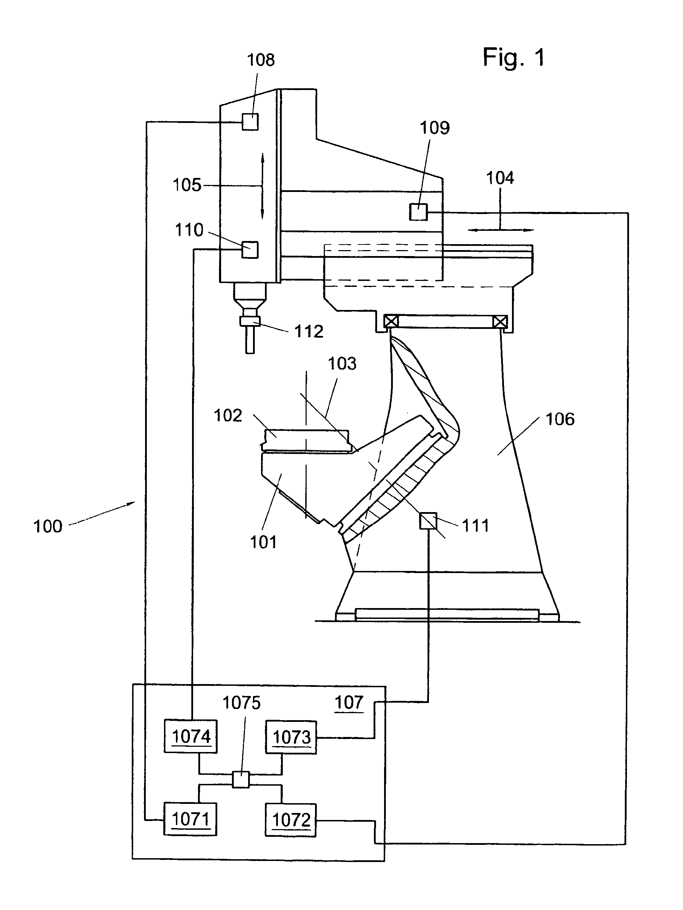

In Fig. 1, an example of an apparatus according to the invention is shown. The example shown is a multiaxial machining apparatus and, more specifically, a five-axis milling apparatus 100. A five-axis milling apparatus is known per se, for instance from US patent publication 5,669,867. The milling apparatus 100 comprises a frame 106 with a holder 101 for a workpiece 102 and a cutter 112. The holder 101 and cutter 112 are movable relative to each other. In the example shown, the holder 101 can rotate about a rotation axis 103 relative to the frame 106. The cutter 112 can move in horizontal and vertical direction relative to the frame 106, as is indicated with the arrows 104 and 105. The rotation axis 103 is at an angle with respect to the plane of the holder 101 on which the workpiece 102 lies. The angle of the workpiece 102 relative to the cutter 112 can be varied by rotating the holder 101 about the axis 103, as is known from US patent publication 5,669,867.

The rotation of the holder 101, the movement of the cutter 112 and the cutter 112 are driven by drive units 108 - 111, for instance electric motors, which are communicatively connected to a central control apparatus 107. The control apparatus 107 is provided with control units 1071 - 1074 for driving the milling apparatus 101 via the drive units 108 - 111. In the example shown, each of the control units 1071 - 1074 is arranged for converting instructions coming from a central control unit 1075 into drive signals for the respective unit 108 - 111. The central control unit 1075 sends instructions such that, during machining, the workpiece is positioned in a suitable manner by the drive units 108 - 111 and their associated control units 1071 - 1075, so that the desired processing is carried out.

With the apparatus such as the five-axis milling apparatus 100 it is possible, by tilting and rotating, to place the tool 112, for instance a cutter, in virtually any orientation and position relative to the workpiece 102. In the examples shown of an apparatus or method according to the invention, cavities or spaces are made in a workpiece from two or more sides, for instance by cutting and/or grinding the workpiece. The workpiece can then be machined into a construction element according to the invention such that via small openings a relatively large internal volume is removed from the workpiece so that relatively large spaces are formed in the workpiece.

The milling apparatus 100 can carry out a method according to the invention with great precision. However, a method according to the invention can also be carried out with different means, such as, for instance, by hand. In Fig. 2, schematically, a flow chart is shown of an example of a method according to the invention. In a first step 200 on a first side of the workpiece an opening is provided. Then, in a second step 201, from the opening on the first side, the workpiece is hollowed out further. In step 202, a second opening is provided on a second side of the workpiece, and in step 203 the workpiece is hollowed out from the second opening too. As a rule, the second side is located opposite the first side, this is, however, not strictly necessary. As indicated in Fig. 2 with the arrows 204 - 207, after the removal of the material on one side, a next opening can be provided and to that end, step 200 or 202 can be carried out again or an opening can be provided on the other side. It is then also possible to machine the workpiece from both sides at the same time.

The steps of the example of a method according to the invention illustrated by the flow chart of Fig. 2 can also be carried out in a different order. For instance, it is possible to first provide a first opening in a first side and thereupon, or simultaneously, provide a second opening in a second side and to subsequently hollow out the workpiece via the first opening and then via the second opening or, first, via the second opening and then via the first opening or from both openings at the same time.

A method according to the invention can for instance be utilized in materials to be cut or ground. With a method according to the invention, good overall tolerances are attainable, since a method according to the invention can lead to a reduction of parts: for instance no separate cover plate is required for obtaining a good rigidity. A reduction of parts then leads to a reduction of the number of potentially relatively inaccurate transitions between parts, so that the overall accuracy increases.

When machining materials with high internal stresses, removal of material may lead to deformations of the product. With a construction element according to the invention, due to the connection between the sides, such a possible deformation is reduced. In addition, the construction element can be designed so as to have a high degree of symmetry, such as for instance in the example of Figs. 16A - B. A favorable effect of this is a well-balanced removal of material from two sides. As a result, the deformation which has occurred after machining one side will be somewhat reduced after machining the second side. These two effects combined lead to a further increase of the overall accuracy.

It is also possible, for instance, to dispense with adjustment mechanisms for fine-tuning since the whole is sufficiently accurate due to the increased overall accuracy. This reduces *inter alia* the number of parts, the weight and the testing and alignment time.

Moreover, a method according to the invention offers a large design choice, because for a given workable volume a more rigid and/or lighter part can be manufactured. This yields a further enlargement of the freedom in designing other parts which, one way or the other, have a relation to the construction element according to the invention.

Also, a construction element manufactured with a method according to the invention has relatively few assembly parts and a relatively short assembly time due to the limited number of components and the possibility to, for instance, dispense with adjustment mechanisms for fine-tuning. The local rigidity of a construction element according to the invention can be increased in several ways, such as by changing the internal structure, for instance by leaving additional reinforcement ribs in the space or spaces at the inside of the side(s) with the opening(s). To that end, the external structure also can be adapted, for instance by increasing the local thickness.

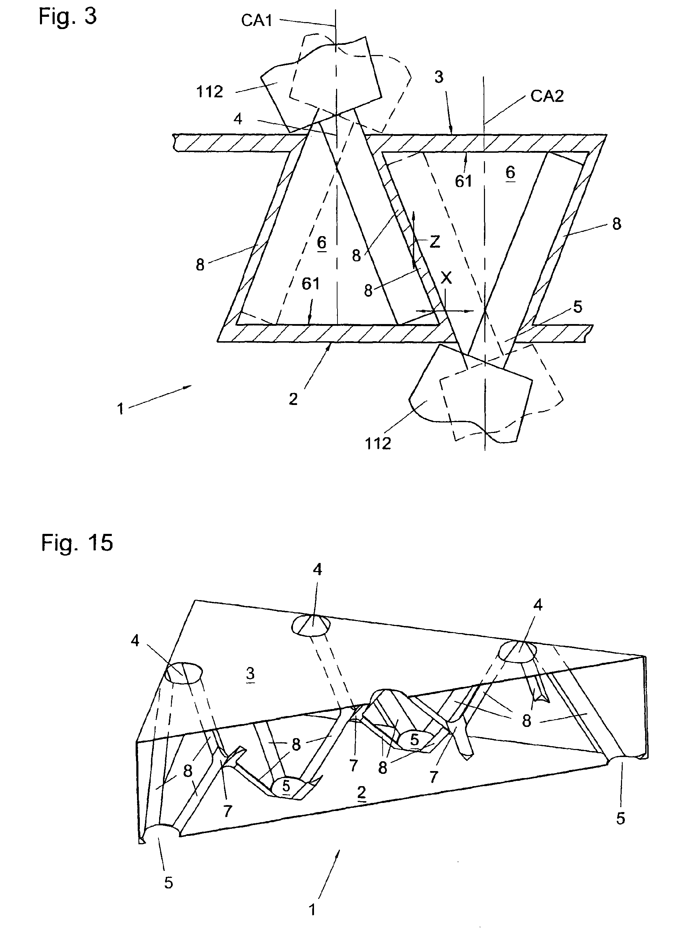

Fig. 3 shows an example of a manner in which the workpiece can be hollowed out from two sides, located opposite each other in this example, and can be formed into a construction element according to the invention. From a first opening 4 in a first side 3 of the workpiece 1, a space 6 has been provided with a machining element 112, in this example a cutter, by hollowing out the workpiece from a first opening 4 with a cutter or other tool. From a second side 2, via a second opening 5 too, the workpiece 1 is hollowed out with a cutter 112.

In the example shown, the angle of the cutter 112 relative to the surfaces on the first and second side 2, 3 is varied while the respective opening, however, is not significantly enlarged. As a result, the construction element has a low weight, while the surfaces remain largely intact. In the example, to that end, the cutter 112 is pivoted about a pivot located in or adjacent the original surface of the workpiece at the location of the opening 4 or 5, respectively. Thus, via a small opening, a large amount of material can be removed from the workpiece 1. The openings 4, 5, respectively, in the surfaces 2, 3 of the workpieces form a constriction of the spaces 6. Also, the tool 112 is held at an angle to the respective surface 2, 3, so that adjacent the surfaces 2, 3, apart from the openings 4, 5, no material is removed and the surfaces 2, 3 have remained virtually intact.

In the example in Fig. 3, in the workpiece,. conical spaces are provided; the spaces 6 are bounded by a substantially flat base 61 and the plane that is formed by the generatrices 8 of the points of a closed curve located in the base surface 61 bounding the base surface and a point outside the base. In the example shown, this point is adjacent the respective openings in the surfaces 2, 3 of the workpiece 1. In the example shown, the flat base 61 is obtained by also varying, when pivoting, the extent to which the cutter 112 is inserted into the workpiece. Both the base and the generatrices can have any desired shape and position. In a construction element according to the invention, the spaces can also have a different shape, such as for instance spherical, cubic or otherwise. '

With the construction element according to the invention, weakening of the element is prevented as much as possible in that the sides with the openings are virtually completely intact. Only the entrance openings for the tool, in Fig. 3 the openings 4, 5, interrupt the respective surfaces.

A construction element according to the invention can be very rigid, in particular upon bending or twisting. Depending on the wall thickness, bottom thickness and the specific manner of use of the invention, simulations have shown that a construction element according to the invention is at least twice as rigid as the known elements with the same self-weight.

A construction element according to the invention can also be light in weight, inter alia because due to the connection remaining intact between the sides, relatively thinner walls and ribs suffice. It has, for instance, appeared that in aluminum, as a rule, a wall thickness to 0.3 mm is well attainable with a construction element according to the invention. It has also appeared that with a construction element according to the invention light weighting percentages of less than 5% are attainable, while with the known traditional construction elements often a percentage of more than 20% is attainable. The light weighting percentage then indicates how much volume of material the construction element has in comparison with the volume of the entire construction element.

Also, due to the combination of high rigidity and low weight, a construction element according to the invention has a high eigenfrequency, so that, in use, few _{Q}r no undesired vibrations occur in the construction element. Consequently, a construction element according to the invention can be applied in uses wherein many vibrations occur, such as, for instance, in the vicinity of combustion engines. Furthermore, a higher rigidity with the same weight leads to less bending and a lower amplitude of possible vibrations induced during the manufacturing process according to the invention so that the surfaces of the construction element can be of smoother and more accurate design.

A construction element according to the invention is manufactured from one single part and therefore forms a homogenous or monolithic entity. Consequently, a construction element according to the invention is particularly suitable to be used under extreme conditions such as cryogenic conditions, high temperature or vacuum uses, because the entire element reacts in the same manner to extreme conditions. Moreover, since it contains little material, a construction element according to the invention can have a good heat transfer and a short cooling down and/or heating up cycle, so that such a construction element according to the invention rapidly and readily adjusts and for instance stresses in the material as a result of temperature differences are prevented.

A construction element according to the invention can also be used in, for instance, optical or aeronautical uses, such as, for instance, in telescopes or frameworks for airplanes or space crafts. A construction element according to the invention can also be used in the semiconductor industry. In particular in so-called wafer-steppers, it is of importance that the carrier ('stepper') on which a thin slice of semiconductive material ('wafer') lies, can be positioned rapidly and with great precision. A construction element according to the invention can then be advantageously used, so that the carrier, as a result of the low weight, can be accelerated or decelerated in a short period of time and, as a result of the great rigidity, can be accurately placed. Similar advantages can also be obtained in other uses in which high accelerations/decelerations of products occur, such as, for instance, in mechanisms or robots, machining apparatus, measuring machines, 'pick-and-place'-mechanisms such as component placing machines and 'wire-bonders', as well as for printers and other professional motion machines.

Furthermore, in a construction element according to the invention, cables and ducts can simply be arranged through the openings in the construction element, in particular if the spaces in the element are interconnected.

In Fig. 3, the spaces 6 are separated from each other by a connecting element 8 connecting the surfaces 2, 3 to each other. In Fig. 3, the connecting element 8 is a wall separating the two adjoining spaces 6. It is also possible that the spaces overlap to a greater or lesser extent. Overlap can be expressed in a percentage and can vary between 0 and 100%. This can occur in two directions: X and Z, as indicated with the arrows X, Z in Fig. 3. The X-direction is then in the imaginary plane which is at an equal distance from the two surfaces from which the workpiece is hollowed out. In Fig. 3, this plane is parallel to and at an equal distance from the surfaces 2, 3 in which the openings 4, 5 are located. The Z-direction corresponds to the normal of that plane. The normal of the X-direction which runs through the center of the respective entrance opening 4, 5 of the spaces 6 is the central cavity axis, indicated in Fig. 3 by the dotted lines CA1 and CA2.

The overlap in X-direction is defined as the ratio between the distance or angle between the central axes of two adjoining cavities relative to the imaginary distance or angle at which the first cavity and the adjoining cavity exactly touch each other. When the cavities exactly touch there is 0% overlap; when the cavities coincide, an overlap of 100% is involved. The extent of overlap in the Z-direction is defined as an extent to which the central cavity axes of two adjoining cavities projected on the X-direction coincide. In Fig. 3, when projected in the X-direction, the central cavity axes overlap each other partly but not completely, and therefore there is an overlap in the Z-direction of less than 100%.

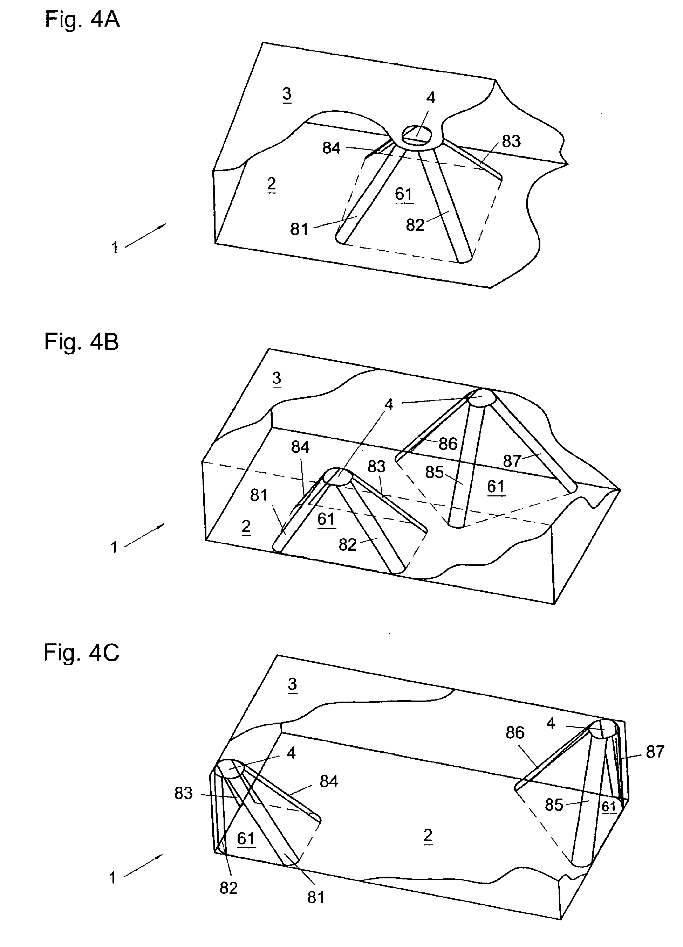

In Figs. 4A - 4C, examples of spaces and the connections between the surfaces 2, 3 are shown. In Fig. 4A, a cavity in the middle of a construction element 1 according to the invention is shown, while in Fig. 4B, the cavities near the sides of a construction element 1 are visible. In Fig. 4C, a cavity near the corners of a construction element according to the invention is visible. In Fig. 4A, an example is shown of a construction element, where the cavity between the first side 2 and second side 3 forms a pyramid with a square base 61, as is indicated in dotted lines. The top of the pyramid is omitted because this is formed by the entrance opening 4 for the tool. That is why, strictly speaking, the space bounded by the pyramid has the shape of a truncated pyramid or of a truncated cone with a rectangular base. The pyramidal cavity is in communication with other cavities in the construction element which cavities are not shown in Fig. 4A. The pyramidal cavity is bounded by connections 81 - 84 between the first side 2 and the second side 3. Here, the connections form the ribs of the pyramid. In the example of Fig. 4B, the connections 81- 87 bounding the pyramidal cavities are at the edge of the construction element 1. There, the connections 81- 84 form the ribs of a pyramid with a base forming a non-square rectangle. The connections 85 - 87 form the ribs of a pyramid with a triangular base. In Fig. 4C, connections 82 and 87 form a rib of the construction element and connections 81 - 84 and 85 - 87, respectively, form pyramids, which form a corner of the construction element.

In Figs. 4A - 4C, the connections 81 - 84 form the ribs of a pyramid, but the connections between the first side and the second side can also be designed differently and, for instance, form the faces of the pyramid and be interconnected, so that the space bounded by the pyramid is separated from other spaces in the construction element and that, therefore, the spaces have 0% overlap in the X-direction.

Broadly speaking, all spaces or cavities in a construction element according to the invention can be described as variants of a pyramid or a different cone-shape. Variants can, for instance, be made by changing the base surface, for instance by designing the base to be not flat but curved. Also, the shape of the edges of the base can, for instance, be straight or curved or a combination thereof. Also, the generatrices and hence the interior of the pyramid can be designed in any suitable manner, for instance, generatrices can be curved so that the walls of the pyramid or the cone are concave, convex or a combination thereof. The spaces in a construction element according to the invention can be manufactured with several tools. For instance, one cavity can be made with several, different tools and hence have several sorts of roundings.

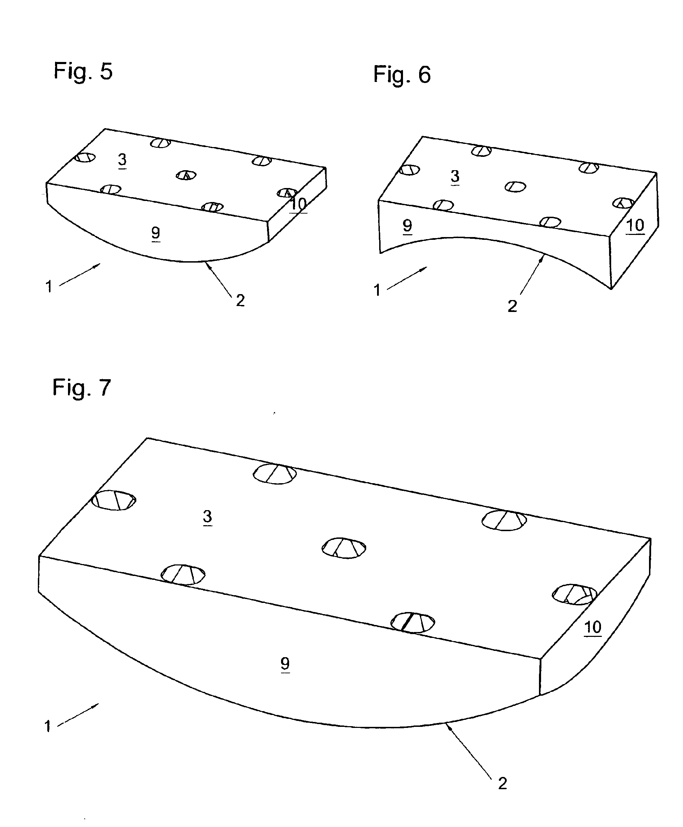

In Figs. 5 - 15, examples are shown of shapes of construction elements according to the invention. Naturally, the invention is not limited to the shapes shown. In Figs. 5, 6 and 7, a construction element is shown with one of the surfaces, in these Figures the second side 2, of curved design. In Fig. 5, the second side has one convex curve, while in Fig. 6, the second side has a concave curve. In Fig. 7, the side 2 is multi-curved.

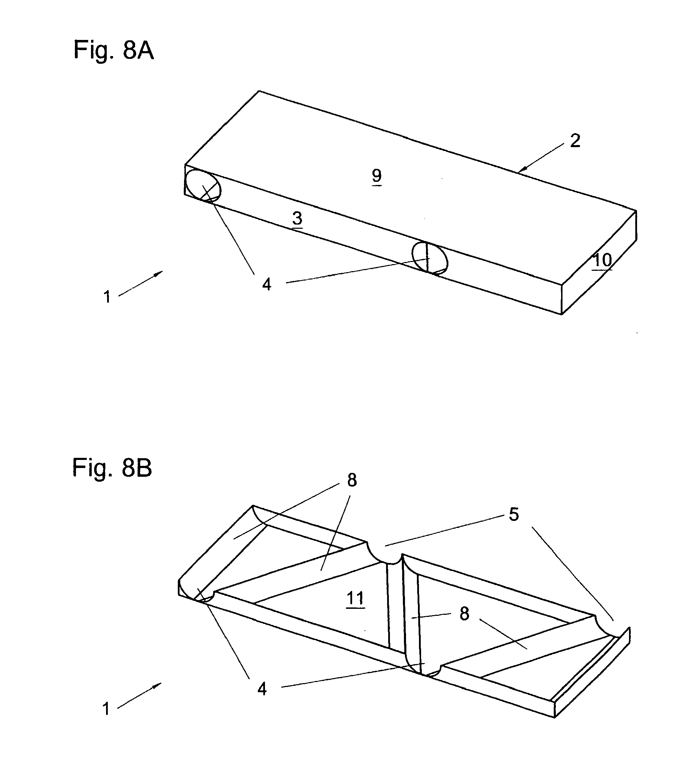

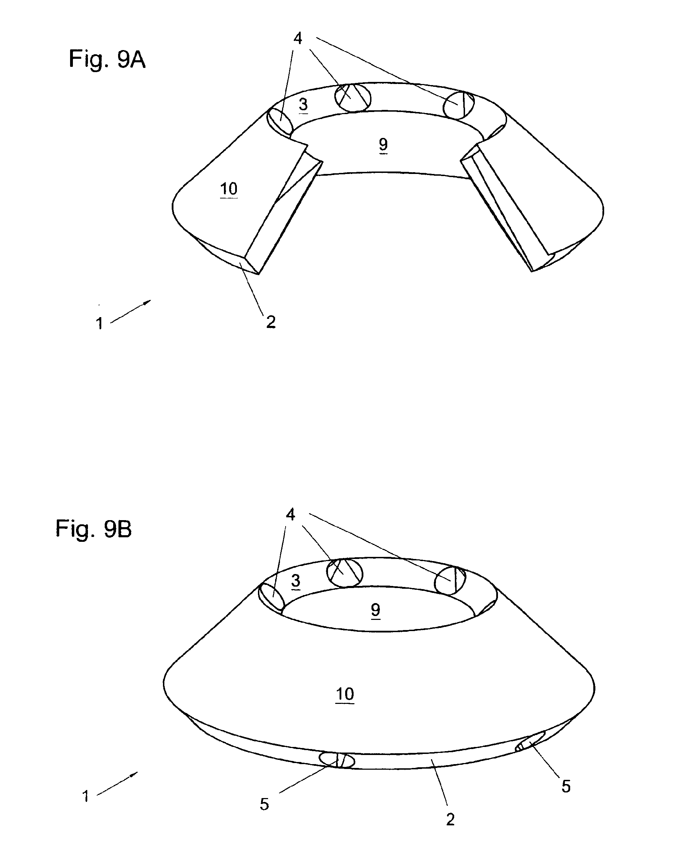

Fig. 8A shows a perspective view of a strip-shaped construction element according to the invention. Fig. 8B shows a cutaway view of the strip-shaped construction element. What is special about the spaces in the strip-shaped construction element is that the base surface of the pyramid or conical spaces is a rectangle whose width is equal to the width of the entrance opening. Overlap of cavities is possible, even to such an extent that the internal ribs disappear. If the width of the base surface of the cavity in a strip is larger than the tool diameter, and the width of the entrance opening remains minimal, then, the internal structure will resemble more that of a beam. The strip is in fact a special variant of a beam. As shown in Fig. 9A and 9B, the side surfaces 9, 10 of the strip can be curved and endless, so that the construction element can, for instance, be conical or funnel-shaped.

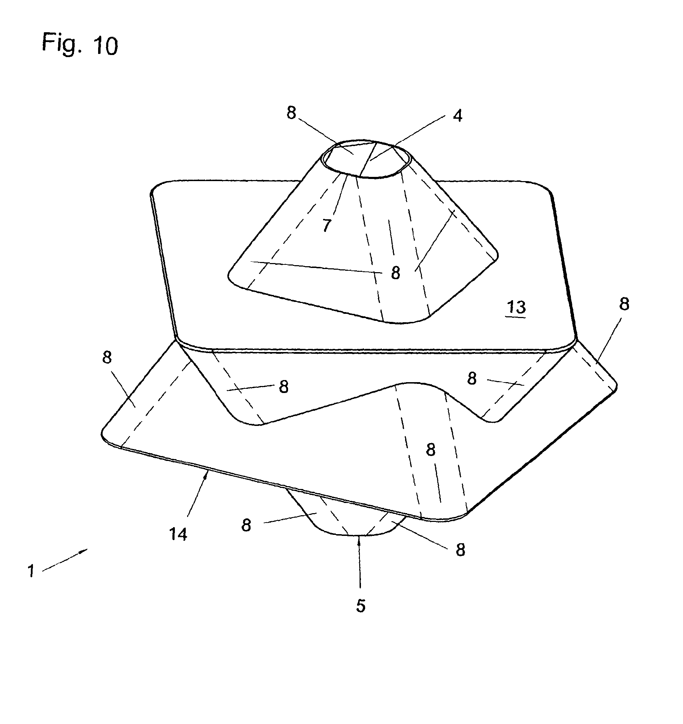

Fig. 10 is an example of a construction element according to the invention shown with a composite pyramid shape. The element in Fig. 10 is formed by two pyramidal recesses with 100% overlap in X-direction and more than 0% overlap in Z-direction. Here, first, from two opposite sides, a pyramidal space is provided in a workpiece via the openings 4, 5, whereupon at the outside of the recess, further material has been removed, so that only the connections 8, in the example the inclining walls of the pyramids, have remained.

In Fig. 10, the Z-overlap is smaller than 100% and the bases 13, 14 of the pyramids do not coincide with the walls in which the openings 4, 5 have been provided. Naturally, the overlap can also be 100%, so that the bases 13, 14 coincide with the sides in which the openings 4, 5 lie. The Z-overlap can also be 0%, so that the bases 13, 14 coincide and form a partition wall.

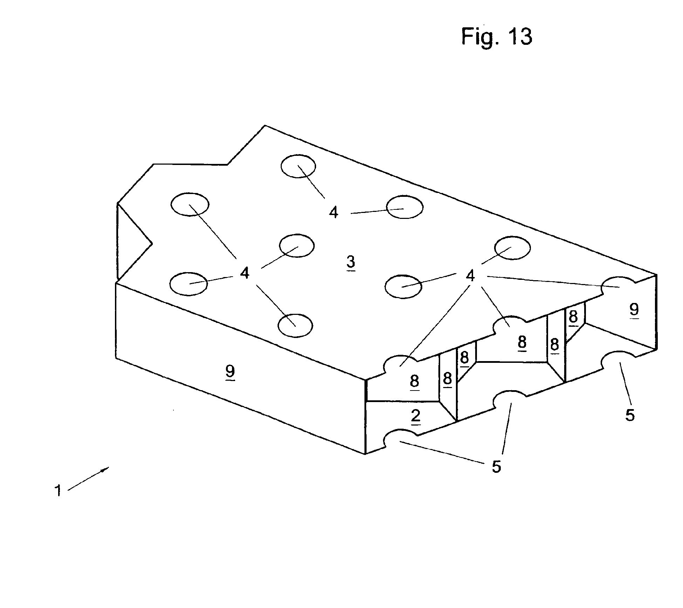

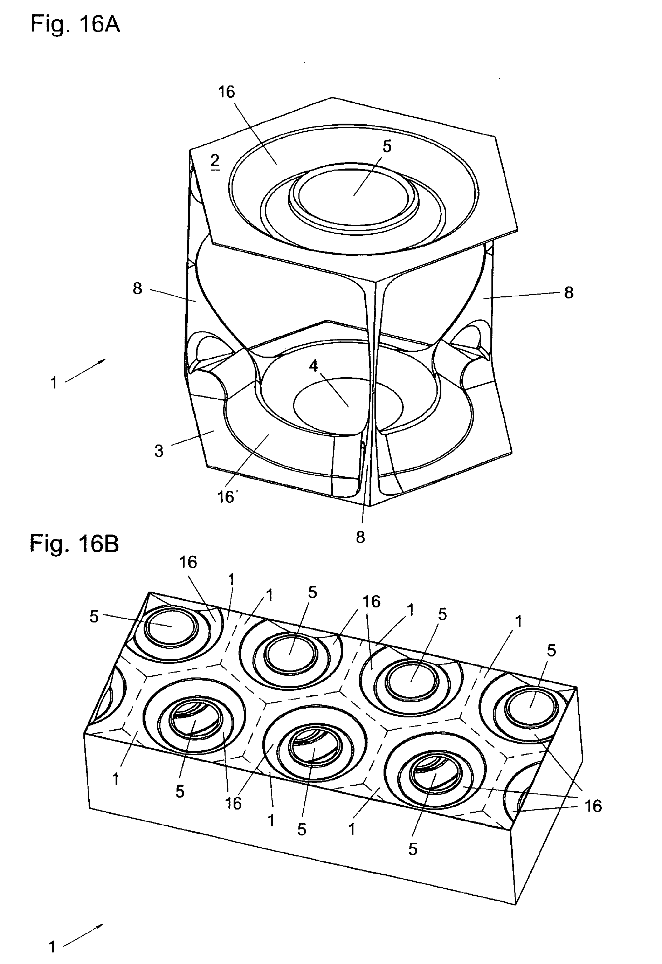

With the construction element according to the invention shown in Fig. 10, as is the case with the other examples, the shapes of the spaces in the element can be varied. For instance, the spaces can have a hexagonal base with at least partly vertical walls in upstanding relation thereto and have 100% overlap in X- as well as in Z-direction, so that a honeycomb-shaped construction element is obtained, as is shown, for instance, in Fig. 13. Also, from the faces of the pyramid, material may have been partly removed so that, for instance, only ribs of the pyramid are present, as is the case in the example of Fig. 15.

It is also possible to design the construction element to be spherical. A sphere can be understood to be a special variant of the multiple pyramid. A spherical construction element can then be manufactured by hollowing out two pyramid cavities, the pyramids having a circular base and concave inner wall and being located opposite each other. When the overlap in the X-direction is 100% and the overlap in the Z-direction minimally 0%, no effective bottom surface remains and a spherical space is obtained. The sphere can then also be provided with more openings in the surface so that, while utilizing the same tool, the diameter of the sphere can be enlarged.

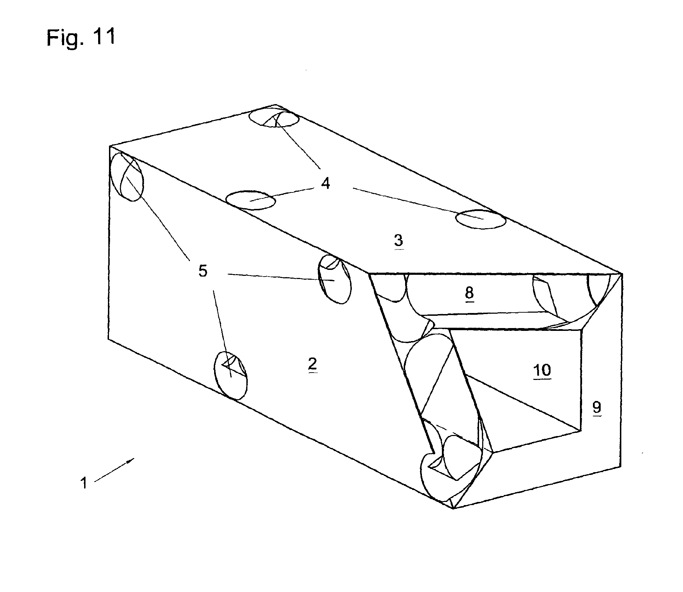

Fig. 11 shows a tubular example of a construction element according to the invention. A tube can be understood to be an assembly of several strip-shaped elements as shown, for instance, in Figs. 8A and 8B. The tube can vary in cross section as well (circle, polygon, etc.) and for instance taper lengthwise. In one wall of the tube, the cavities have no overlap in the X-direction but between two adjoining walls, intersection between cavities occurs. Through a combination of the tube and the method of hollowing out as used with a sphere, also a pipe-shaped element, i.e. an element with a circular cross section, can be obtained.

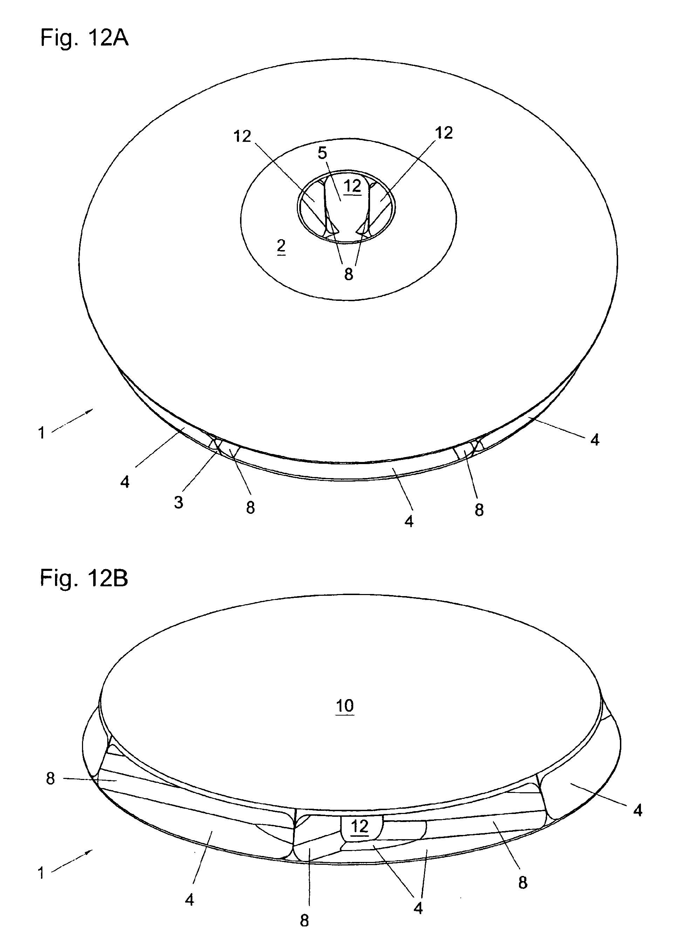

In Figs. 12A and 12B, a disc-shaped element is shown. The disc-shaped element 1 has a front wall 10 and rear wall 2. In the example shown, the front and rear wall 2, 10 are multi-curved in the same direction, i.e. in Figs. 12A and 12B, the concave side of the rear wall 2 is directed towards the convex side of the front wall 10. It is also possible to design a disc-shaped element such that, for instance, the convex sides of both walls are directed towards each other or away from each other. In the latter case, the disc-shaped element can for instance be discus-shaped. Such an element can be manufactured by combining a spherical element and an element with curved strip-shape such as, for instance, the construction element in Figs. 9A-9B. In the disc-shaped element in Figs 12A-B, via openings 4 on the edge of the disc, radial spaces are provided, separated from each other by ribs 8. The ribs 8 of the disc-shaped element can be considered as several I-profiles, extending in radial direction from the opening 5 in the rear wall 2 towards the edge of the disc. However, the ribs can also have a different shape and, for instance, extend in a spiral shape from the center of the disc towards the edges. The overall direction is radial, but the ribs need not expressly be straight. The disc-shaped element is also hollowed out via the opening 5 in the rear wall 2. In the example shown, the element is hollowed out via a single opening 5, but it is also possible to hollow out the element via several openings in the back wall. The spaces between the ribs 8 have a passage 12 to the opening 5 where the spaces meet.

The disc-shaped element can be used for optical applications, for instance as a very rigid and light mirror. With the known mirror constructions, in optical-mechanical designs, a mirror is attached to a base plate. A drawback thereof is, inter alia, that additional heat resistance occurs due to the limited contact surface between both parts, in particular with cryogenic uses. With a construction element according to the invention, it is possible to join the functions of the mirror and base plate by providing the element with a mirroring or reflecting surface, in the example of Figs. 12A-B, for instance, the surface 10 or the surface 2 can be designed to mirror by, for instance, polishing it. By joining both functions, the heat resistance is, at least partly, reduced. As a result, the optical accuracy of the mirror increases too. The mirror surface can then be concave, convex or planar. The sides with openings too can be provided with a mirroring surface.

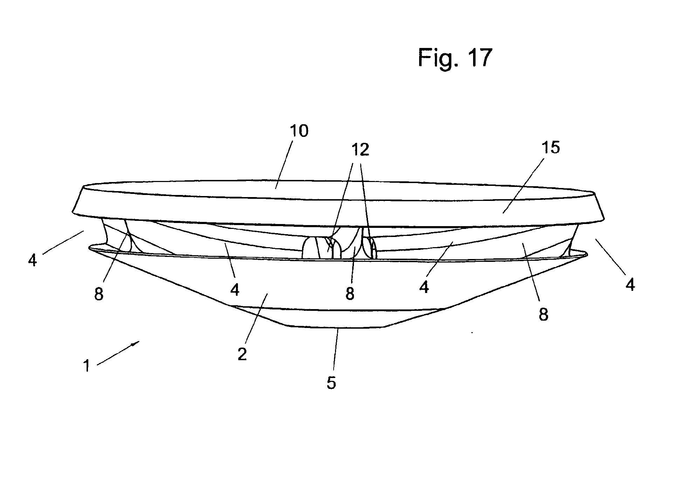

It is possible to provide the disc-shaped element with an upstanding edge (rib), as indicated in the example of Fig. 17 by reference numeral 15. Due to the upstanding edge 15, the rigidity of the hollow side 10 of the disc-shaped element is increased, which is suitable, in particular when used as a mirror, since optical deviations in the mirror are reduced as a result thereof

As described hereinabove, the cavities or spaces in a construction element according to the invention can have any desired shape. For instance, the spaces can be designed having a honeycomb-shape, as shown in Fig. 13, by providing spaces with a hexagonal base and at least partly vertical walls from the first side and the second side, while the spaces have a 100% X-overlap and more than 0% Z-overlap. Also, between the first side 2 and second side 3, one continuous space can be formed in which connecting beams extend forming ribs of pyramids, as in Fig. 15. In Fig. 15, from the openings 4, 5 pyramids with a rectangular base have been hollowed out with an X-overlap of just over 0%, such as less than 5% and a Z-overlap of almost 100%.

For, for instance, the attachment of other structures to a construction element according to the invention, the local rigidity can be increased. For instance, a higher local rigidity can be obtained by reducing the base surface of the cavities and thus obtaining a larger number of cavities. Also, all or local internal walls/ribs can be designed to be thicker by increasing the mutual distance in X- and Z-direction between the cavities. Also, additional internal and/or external ribs can be added or one of the surfaces of the element can be designed to be thicker locally, or entirely. Also, the shape of the surfaces of the element can be varied, such as for instance concave or convex.

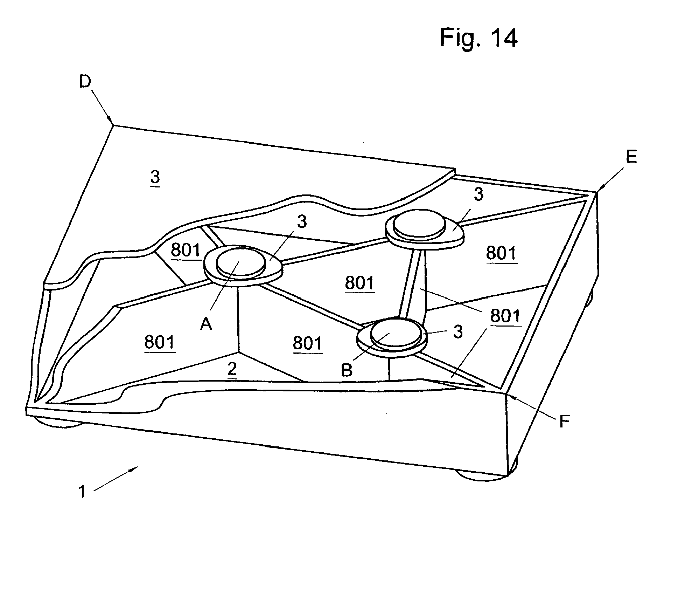

As shown in Fig. 14, also, internal partitions 801 can be added, designed as left-behind material of the workpiece. The partitions ensure a local increase of strength and rigidity. Also, due to the partitions, the overall strength and rigidity of the construction element according to the invention can be increased. As a result, it is possible, as in the example of Fig. 14, to transfer a load on, for instance, the points A-C to four other points. In the example of Fig. 14, the partitions 801 are internally inside the workpiece and run from the three attachment points A-C on the top side to attachment points (not shown) at the corners of the construction element 1, three corners D-F of which are shown in Fig. 14. In the example shown in Fig. 14, for instance the weight of a product attached to the attachment points A-C can be transferred by the partitions 801 to the four corner points of the element so that, locally, at the intersections of the partitions, the rigidity is increased without adding much mass, while, also, the overall rigidity increases.

The walls, and partitions, if any, of a construction element according to the invention can be provided to a greater or lesser extent with openings. Besides being planar, the sidewalls can then also be single and/or multi-curved. Also, the sidewalls can differ in thickness locally, for instance in that material is internally and/or externally added or removed. Also, the spaces in a construction element according to the invention can be filled with, for instance, an insulating material or a gas. If the spaces are mutually connected, these can also serve as channels for, for instance, a coolant. Naturally, in this latter case, the openings should be closed off.

In Figs. 16A-B, an example of a construction element according to the invention is shown wherein in the first and second side 2, 3, respectively, adjacent the opening 4, 5, a groove 16 is provided, extending, in this example, around the respective opening. Due to the groove, more space for the processing element is obtained at the respective side, so that this can be brought at a more inclined angle into the opening 4, 5. Also, due to the groove, the local rigidity of the surface of the respective side is increased, which can be of use, for instance when attaching other parts to the construction element. The example shown is particularly suitable for use with isostatic suspensions.

The example of a construction element according to the invention of Fig. 16B comprises several units as shown in Fig. 16a. The unit shown in Fig. 16A has three ribs 8 interconnecting the first and second side 2, 3. The number of ribs may vary: from 0 to indefinite, i.e. a honeycomb-shaped connection. In practice, the number will mostly be between three and six. In the example shown, the X-overlap of the space manufactured via the first opening and the space manufactured via the second opening is 100% and the Z-overlap is almost 100%.

It is noted that the invention is not limited to the examples described hereinabove. After having read the foregoing, the variants will be self-evident to the skilled person. It is, for instance, possible to provide the first and/or the second opening at an edge or corner of the construction element.

It is also noted that the term "comprising" does not exclude that, in addition to the elements mentioned, other elements are present.

## Claims

1. A construction element, comprising:
at least one first side (3) with at least one first opening (4);
at least one second side (2) with at least one second opening (5);
at least one first space (6) between the first (3) and second side (2) which is connected to the first opening (4),
at least one second space (6) between the first (3) and second side (2) which is connected to the second opening (5) and
at least one connection (8) between the first side and second side (2) which bounds the spaces (6) at least partly,
wherein the first side (3), the second side (2) and the connection (8) form one integral whole and **characterized in that** at least one of the spaces narrows towards the opening connected to it.

2. A construction element according to claim 1 or 2, wherein at least one of the spaces is conical or pyramidal.

3. A construction element according to claim 1 or 2, comprising: at least two beam-shaped connections between the first and second side, which bound the spaces at least partly.

4. A construction element according to claim 3, wherein the beam-shaped connections form generatrices of a cone or ribs of a pyramid.

5. A construction element according to claim 3 or 4, wherein the beam-shaped connections also form ribs of the construction element.

6. A construction element according to any one of the preceding claims, wherein the first space and the second space overlap at least partly.

7. A construction element according to any one of the preceding claims, wherein less than 10% of the surface of the first side is formed by openings.

8. A construction element according to any one of the preceding claims, wherein less than 10% of the surface of the second side is formed by openings.

9. A construction element according to any one of the preceding claims, wherein the spaces comprise at least 50% of a volume of the construction element located between the first side and second side.

10. A construction element according to any one of the preceding claims, wherein the spaces comprise 90% of a volume of the construction element located between the first side and second side.

11. A construction element according to any one of the preceding claims, wherein the first side and the second side are at a distance from each other.

12. A construction element according to any one of the preceding claims, wherein the first side is not parallel to the second side.

13. A construction element according to any one of claims 1 - 13, wherein the first side and the second side are substantially parallel.

14. A construction element according to any one of the preceding claims, further comprising:
at least one side surface between the first and the second side.

15. A construction element according to any one of the preceding claims, wherein at least one of the side surfaces or sides is at least partly curved.

16. A construction element according to claim 14, wherein at least one of the side surfaces or sides is single-curved.

17. A construction element according to claim 14, wherein at least one of the side surfaces or sides is multi-curved.

18. A construction element according to claim 14 and one or more of claims 1 - 16, wherein the surface of at least one of the first and second sides is annular and between the sides, a first side surface and a second side surface are present.

19. A construction element according to claim 18, wherein the diameter of the annular first side is greater than the diameter of the annular second side.

20. A construction element according to claim 15 and one or more of claims 1 - 19, wherein the first side surface and the second side surface have a greater surface than the first side or the second side.

21. A construction element according to any one of the preceding claims, wherein at least one of the side surfaces is disc-shaped.

22. A construction element according to any one of the preceding claims, with a spherical element surface comprising the first side and second side.

23. A construction element according to any one of the preceding claims, which is, at least partly, of aluminum.

24. A mirror, comprising a construction element according to any one of the preceding claims, at least one side or surface of which is a reflecting surface, at least partly.

25. A mirror according to claim 24, wherein the construction element is a construction element according to claim 20 and one of the disc-shaped side surfaces comprises a reflecting surface.

26. A method for manufacturing a construction element according to any one of claims 1 - 25 from a workpiece with at least a first side and at least a second side, the method comprising:
- providing a first opening in the first side;
- removing material, at least partly, located between the first and second side via the first opening, so that a first hollow space is obtained in the workpiece;
- providing a second opening in the second side and
- removing material, at least partly, located between the first and second side via the second opening, so that a second hollow space is obtained in the workpiece;
- wherein the removal of material is carried out such that between the first side and second side at least one connecting element is formed bounding the spaces at least partly and at least one of the spaces narrows towards the opening connected to it.

27. An apparatus for manufacturing a construction element according to one or more of claims 1 - 25, comprising
at least one machining element; and
at least one holder for at least one workpiece and
at least one control apparatus for driving the at least one machining element and the at least one holder, wherein the at least one control apparatus comprises at least units for:
providing at least a first opening in a first side;
removing material, at least partly, located between the first and a second side with the at least one machining element via the at least one first opening, so that at least a first hollow space is obtained;
providing at least one second opening in a second side and removing material, at least partly, located between the first and second side with the at least one machining element via the at least second opening, so that at least a second hollow space is obtained; the arrangement being such that at least one of the spaces narrows towards the opening connected to it.

28. An apparatus according to claim 27, wherein at least one of the at least one machining elements comprises a multiaxial milling apparatus.

29. A data carrier provided with data representing a program loadable in a programmable apparatus, which program comprises program code for carrying out one or more steps of a method according to claim 26 with an apparatus according to claim 27 or 28.

## Patentansprüche

1. Bauelement mit:
mindestens einer ersten Seite (3) mit mindestens einer ersten Öffnung (4);
mindestens einer zweiten Seite (2) mit mindestens einer zweiten Öffnung (5);
mindestens einem ersten Raum (6) zwischen der ersten (3) und der zweiten Seite (2), der mit der ersten Öffnung (4) verbunden ist;
mindestens einem zweiten Raum (6) zwischen der ersten (3) und der zweiten Seite (2), der mit der zweiten Öffnung (5) verbunden ist; und
mindestens einer Verbindung (8) zwischen der ersten (3) und der zweiten Seite (2), welche die Räume (6) zumindest teilweise begrenzt;
wobei die erste Seite (3), die zweite Seite (2) und die Verbindung (8) ein einstückiges Ganzes bilden,
**dadurch gekennzeichnet, dass** mindestens einer der Räume sich zu einer mit ihm verbundenen Öffnung hin verjüngt.

2. Bauelement nach Anspruch 1, bei dem mindestens einer der Räume konisch oder pyramidenförmig ist.

3. Bauelement nach Anspruch 1 oder 2 mit mindestens zwei trägerförmigen Verbindungen zwischen der ersten und der zweiten Seite, welche die Räume zumindest teilweise begrenzen.

4. Bauelement nach Anspruch 3, bei dem die trägerförmigen Verbindungen Generierende eines Kegels oder Rippen einer Pyramide bilden.

5. Bauelement nach Anspruch 3 oder 4, bei dem die trägerförmigen Verbindungen auch Rippen des Bauelements bilden.

6. Bauelement nach einem der vorhergehenden Ansprüche, bei dem der erste Raum und der zweite Raum einander zumindest teilweise überlappen.

7. Bauelement nach einem der vorhergehenden Ansprüche, bei dem weniger als 10% der Fläche der ersten Seite durch Öffnungen gebildet sind.

8. Bauelement nach einem der vorhergehenden Ansprüche, bei dem weniger als 10% der Fläche der zweiten Seite durch Öffnungen gebildet sind.

9. Bauelement nach einem der vorhergehenden Ansprüche, bei dem die Räume mindestens 50% eines Volumens des Bauelements umfassen, das zwischen der ersten und der zweiten Seite angeordnet ist.

10. Bauelement nach einem der vorhergehenden Ansprüche, bei dem die Räume 90% des Volumens des Bauelements umfassen, das sich zwischen der ersten und der zweiten Seite befindet.

11. Bauelement nach einem der vorhergehenden Ansprüche, bei dem die erste Seite und die zweite Seite voneinander beabstandet sind.

12. Bauelement nach einem der vorhergehenden Ansprüche, bei dem die erste Seite nicht parallel zur zweiten Seite ist.

13. Bauelement nach einem der Ansprüche 1-12, bei dem die erste Seite und die zweite Seite im wesentlichen parallel sind.

14. Bauelement nach einem der vorhergehenden Ansprüche, ferner mit mindestens einer Seitenfläche zwischen der ersten und der zweiten Seite.

15. Bauelement nach einem der vorhergehenden Ansprüche, bei dem mindestens eine der Seitenflächen oder Seiten zumindest teilweise gekrümmt ist.

16. Bauelement nach Anspruch 14, bei dem mindestens eine der Seitenflächen oder Seiten einfach gekrümmt ist.

17. Bauelement nach Anspruch 14, bei dem mindestens eine der Seitenflächen oder Seiten mehrfach gekrümmt ist.

18. Bauelement nach Anspruch 14 und einem oder mehreren der Ansprüche 1 - 16, bei dem die Fläche der ersten und/oder der zweiten Seite ringförmig ist und zwischen den Seiten eine erste Seitenfläche und eine zweite Seitenfläche vorhanden sind.

19. Bauelement nach Anspruch 18, bei dem der Durchmesser der ringförmigen ersten Seite größer als der Durchmesser der ringförmigen zweiten Seite ist.

20. Bauelement nach Anspruch 15 und einem oder mehreren der Ansprüche 1-19, bei dem die erste Seitenfläche und die zweite Seitenfläche eine größere Fläche haben als die erste Seite oder die zweite Seite.

21. Bauelement nach einem der vorhergehenden Ansprüche, bei dem mindestens eine der Seitenflächen scheibenförmig ist.

22. Bauelement nach einem der vorhergehenden Ansprüche, mit einer kugelförmigen Elementfläche, welche die erste und die zweite Seite umfasst.

23. Bauelement nach einem der vorhergehenden Ansprüche, das zumindest teilweise aus Aluminium besteht.

24. Spiegel mit einem Bauteil nach einem der vorhergehenden Ansprüche, wobei wenigstens eine Seite oder Fläche desselben wenigstens teilweise eine reflektierende Fläche ist.

25. Spiegel nach Anspruch 24, bei dem das Bauteil ein Bauteil nach Anspruch 20 ist und eine der scheibenförmigen Seitenflächen eine reflektierende Fläche aufweist.

26. Verfahren zur Herstellung eines Bauteils nach einem der Ansprüche 1-25 aus einem Werkstück mit mindestens einer ersten Seite und mindestens einer zweiten Seite, wobei das Verfahren umfasst:
- Vorsehen einer ersten Öffnung in der ersten Seite;
- zumindest teilweises Entfernen von sich zwischen der ersten und der zweiten Seite befindendem Material über die erste Öffnung, so dass ein erster Hohlraum in dem Werkstück gebildet wird;
- Vorsehen einer zweiten Öffnung in der zweiten Seite; und
- zumindest teilweises Entfernen von sich zwischen der ersten und der zweiten Seite befindendem Material über die zweite Öffnung, so dass ein zweiter Hohlraum in dem Werkstück gebildet wird;
- wobei das Entfernen des Materials derart ausgeführt wird, dass zwischen der ersten Seite und der zweiten Seite mindestens ein Verbindungselement gebildet wird, welches die Räume zumindest teilweise begrenzt, und mindestens einer der Räume sich in Richtung der mit ihm verbundenen Öffnung verjüngt.

27. Vorrichtung zum Herstellen eines Bauteils nach einem oder mehreren der Ansprüche 1-25, mit:
mindestens einem Bearbeitungselement; und
mindestens einem Halter für mindestens ein Werkstück, und
mindestens einer Steuervorrichtung zum Antreiben des mindestens einen Bearbeitungselements und des mindestens einen Werkstückhalters, wobei die mindestens eine Steuervorrichtung mindestens Einheiten aufweist für
- das Vorsehen mindestens einer ersten Öffnung in der ersten Seite;
- das zumindest teilweise Entfernen von sich zwischen der ersten und der zweiten Seite befindendem Material mit dem mindestens einen Bearbeitungselement über die mindestens eine erste Öffnung, so dass mindestens ein erster Hohlraum in dem Werkstück gebildet wird;
- das Vorsehen mindestens einer zweiten Öffnung in der zweiten Seite; und
- das zumindest teilweise Entfernen von sich zwischen der ersten und der zweiten Seite befindendem Material mit dem mindestens einen Bearbeitungselement über die mindestens eine zweite Öffnung, so dass mindestens ein zweiter Hohlraum in dem Werkstück gebildet wird; wobei die Anordnung derart ausgebildet ist, dass sich mindestens einer der Räume in Richtung der damit verbundenen Öffnung verjüngt.

28. Vorrichtung nach Anspruch 27, bei der wenigstens eines der wenigstens einen Bearbeitungselemente eine Mehrachsen-Fräsvorrichtung aufweist.

29. Datenträger mit Daten, welche ein in eine programmierbare Vorrichtung ladbares Programm darstellen, wobei das Programm einen Programmcode zum Durchführen eines oder mehrerer Schritte eines Verfahrens nach Anspruch 26 mit einer Vorrichtung nach Anspruch 27 oder 28 umfasst.

## Revendications

1. Elément de construction, comprenant :
au moins un premier côté (3) avec au moins une première ouverture (4) ;
au moins un second côté (2) avec au moins une seconde ouverture (5) ;
au moins un premier espace (6) entre le premier (3) et le second (2) côté qui est connecté à la première ouverture (4) ;
au moins un second espace (6) entre le premier (3) et le second (2) côté qui est connecté à la seconde ouverture (5) et
au moins une connexion (8) entre le premier côté (3) et le second côté (2) qui borde les espaces (6) au moins en partie,
dans lequel le premier côté (3), le second côté (2) et la connexion (8) forment un tout intégral et **caractérisé en ce qu'**au moins l'un des espaces se rétrécit vers l'ouverture qui lui est connectée.

2. Elément de construction selon la revendication 1, dans lequel au moins l'un des espaces est conique ou pyramidal.

3. Elément de construction selon la revendication 1 ou 2, comprenant :
au moins deux connexions en forme de poutre entre le premier et le second côté, qui borde les espaces au moins en partie.

4. Elément de construction selon la revendication 3, dans lequel les connexions en forme de poutre forment des génératrices d'un cône ou des arêtes d'une pyramide.

5. Elément de construction selon la revendication 3 ou 4, dans lequel les connexions en forme de poutre forment aussi les arêtes de l'élément de construction.

6. Elément de construction selon l'une quelconque des revendications précédentes, dans lequel le premier espace et le second espace se recouvrent au moins en partie.

7. Elément de construction selon l'une quelconque des revendications précédentes, dans lequel moins de 10% de la surface du premier côté est formée par des ouvertures.

8. Elément de construction selon l'une quelconque des revendications précédentes, dans lequel moins de 10% de la surface du second côté est formée par des ouvertures.

9. Elément de construction selon l'une quelconque des revendications précédentes, dans lequel les espaces comprennent au moins 50% d'un volume de l'élément de construction situé entre le premier côté et le second côté.

10. Elément de construction selon l'une quelconque des revendications précédentes, dans lequel les espaces comprennent 90% d'un volume de l'élément de construction situé entre le premier côté et le second côté.

11. Elément de construction selon l'une quelconque des revendications précédentes, dans lequel le premier côté et le second côté sont à distance l'un de l'autre.

12. Elément de construction selon l'une quelconque des revendications précédentes, dans lequel le premier côté n'est pas parallèle au second côté.

13. Elément de construction selon l'une quelconque des revendications 1-13, dans lequel le premier côté et le second côté sont sensiblement parallèles.

14. Elément de construction selon l'une quelconque des revendications précédentes, comprenant en outre :
au moins une surface latérale entre le premier et le second côté.

15. Elément de construction selon l'une quelconque des revendications précédentes, dans lequel au moins l'une des surfaces latérales ou côtés est au moins en partie courbée.

16. Elément de construction selon la revendication 14, dans lequel au moins l'une des surfaces latérales ou côtés a une seule courbure.

17. Elément de construction selon la revendication 14, dans lequel au moins l'une des surfaces latérales ou côtés a plusieurs courbures.

18. Elément de construction selon la revendication 14 et une ou plus des revendications 1-16, dans lequel la surface d'au moins l'un des premier et second côtés est annulaire et entre les côtés, une première surface latérale et une seconde surface latérale sont présentes.

19. Elément de construction selon la revendication 18, dans lequel le diamètre du premier côté annulaire est plus grand que le diamètre du second côté annulaire.

20. Elément de construction selon la revendication 15 et une ou plus des revendications 1-19, dans lequel la première surface latérale et la seconde surface latérale ont une plus grande surface que le premier côté ou le second côté.

21. Elément de construction selon l'une quelconque des revendications précédentes, dans lequel au moins l'une des surfaces latérales est en forme de disque.

22. Elément de construction selon l'une quelconque des revendications précédentes, avec une surface d'élément sphérique comprenant le premier côté et le second côté.

23. Elément de construction selon l'une quelconque des revendications précédentes, qui est, au moins en partie, de l'aluminium.

24. Miroir, comprenant un élément de construction selon l'une quelconque des revendications précédentes, dont au moins un côté ou une surface est une surface réfléchissante, au moins en partie.

25. Miroir selon la revendication 24, dans lequel l'élément de construction est un élément de construction selon la revendication 20 et l'un des surfaces latérales en forme de disque comprend une surface réfléchissante.

26. Procédé de fabrication d'un élément de construction selon l'une quelconque des revendications 1-25 à partir d'une pièce avec au moins un premier côté et au moins un second côté, le procédé comprenant :
pratiquer une première ouverture dans le premier côté ;
enlever le matériau, au moins en partie, situé entre le premier et le second côté via la première ouverture, de telle manière qu'un premier espace creux est obtenu dans la pièce ;
pratiquer une seconde ouverture dans le second côté ; et
enlever le matériau, au moins en partie, situé entre le premier et le second côté via la seconde ouverture, de telle manière qu'un second espace creux est obtenu dans la pièce ;
dans lequel t'enlèvement du matériau est réalisé de telle manière qu'entre le premier côté et le second côté au moins un élément de connexion est formé bordant les espaces au moins en partie et au moins l'un des espaces se rétrécit vers l'ouverture qui lui est connectée.

27. Appareil de fabrication d'un élément de construction selon une ou plus des revendications 1 à 25, comprenant :
au moins un élément d'usinage ; et
au moins un support pour au moins une pièce ; et
au moins un appareil de contrôle pour piloter l'au moins un élément d'usinage et l'au moins un support, dans lequel l'au moins un appareil de contrôle comprend au moins des unités pour ;
pratiquer au moins une première ouverture dans un premier côté ;
enlever le matériau, au moins en partie, situé entre le premier et le second côté avec l'au moins un élément d'usinage via l'au moins une première ouverture, de telle manière qu'au moins un premier espace creux est obtenu ;
pratiquer au moins une seconde ouverture dans un second côté et enlever le matériau, au moins en partie, situé entre le premier et le second côté avec l'au moins un élément d'usinage via l'au moins une seconde ouverture, de telle manière qu'au moins un second espace creux est obtenu ; l'agencement étant tel qu'au moins l'un des espaces se rétrécit vers l'ouverture qui lui est connectée.

28. Appareil selon la revendication 27, dans lequel au moins l'un des au moins un élément d'usinage comprend un appareil de fraisage multiaxial.

29. Support de données pourvu de données représentant un programme chargeable dans un appareil programmable, lequel programme comprend un code de programme pour réaliser une ou plusieurs étapes d'un procédé selon la revendication 26 avec un appareil selon la revendication 27 ou 28.
